Europäisches Patentamt

European Patent Office

Office européen des brevets

(11) Publication number: **0 075 022**
**B1**

(12) **EUROPEAN PATENT SPECIFICATION**

(45) Date of publication of patent specification: **22.06.88**   (51) Int. Cl.⁴: **G 05 B 19/18**

(21) Application number: **82900995.0**

(22) Date of filing: **30.03.82**

(86) International application number:
**PCT/JP82/00085**

(87) International publication number:
**WO 82/03473 14.10.82 Gazette 82/25**

(54) **TOOL DIAMETER COMPENSATION SYSTEM.**

(30) Priority: **30.03.81 JP 47048/81**

(43) Date of publication of application:
**30.03.83 Bulletin 83/13**

(45) Publication of the grant of the patent:
**22.06.88 Bulletin 88/25**

(84) Designated Contracting States:
**CH DE FR GB LI SE**

(56) References cited:
**EP-A-0 081 590**
**EP-A-0 092 379**
**JP-B-49 026 549**

(73) Proprietor: **FANUC LTD**
**3580, Shibokusa Aza-Komanba Oshino-mura**
**Minamitsuru-gun Yamanashi 401-05 (JP)**

(72) Inventor: **KISHI, Hajimu**
**Hinohirayamadai-Jutaku 1104 6-7-8, Asahigaoka**
**Hino-shi Tokyo 191 (JP)**
Inventor: **SEKI, Masaki**
**3-15-2-406, Takaidonishi**
**Suginami-ku Tokyo 168 (JP)**
Inventor: **KAWASUMI, Masashi**
**3-27, Tamadaira**
**Hino-shi Tokyo 191 (JP)**

(74) Representative: **Billington, Lawrence Emlyn**
**et al**
**HASELTINE LAKE & CO Hazlitt House 28**
**Southampton Buildings Chancery Lane**
**London WC2A 1AT (GB)**

Courier Press, Leamington Spa, England.

## Description

The present invention relates to a tool compensation method, and more particularly to a tool compensation method suitable for applications in which a workpiece is cut by a tapered tool.

NC systems usually have a tool compensation function. Tool compensation corrects a cutting error due to a tool radius by defining as the path of movement of a tool center a path that is displaced a distance equal to the tool radius rightward or leftward from a programmed cutting path.

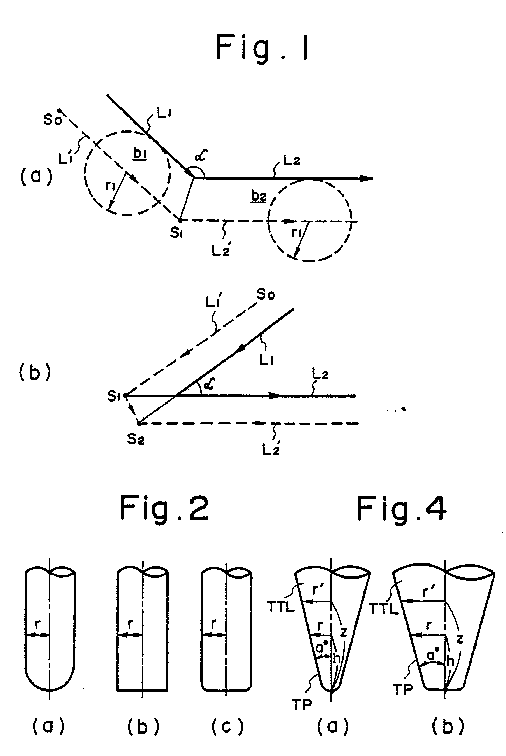

Assuming that there are two programmed cutting paths defined along straight lines $L_1$, $L_2$ extending at an angle $a$ ranging from 90° to 180° as shown in Fig. 1, the process of tool compensation is carried out as follows: A movement command for a current block $b_1$ and a movement command for a next block $b_2$ are read in advance, and straight lines $L_1'$, $L_2'$ are determined which are offset a tool radius $r_1$ from straight lines $L_1$, $L_2$, respectively, in the current and next blocks $b_1$, $b_2$. The coordinates of a point $S_1$ where the straight lines $L_1'$, $L_2'$ intersect are then computed. By moving the tool from a final point $S_0$ in a previous block to the point $S_1$ through pulse distribution, the center of the tool follows a path that is offset a distance equal to the radius $r$ from the properly commanded programmed cutting path for thereby cutting the workpiece. Fig. 2(b) is illustrative of a process of tool compensation performed when the angle $a$ is smaller than 90°.

Where NC systems have such a tool compensation function, programming is quite simple as it is not necessary to take into account the tool radius in preparing an NC data tape. When the tool radius varies due to wear, or use of a different tool, the workpiece can be cut correctly by using a tool radius setting dial on an NC system panel to make a tool radius setting, or supplying a tool radius input through an MDI (manual data input) terminal.

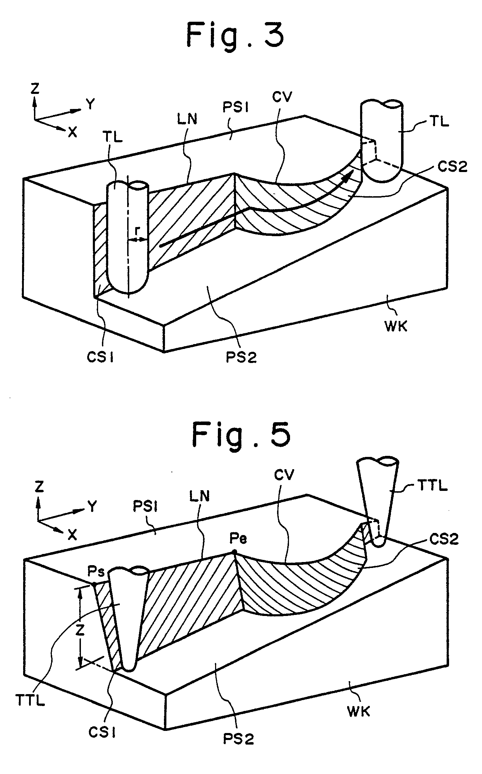

However, the above prior tool compensation method is applicable only to cutting operations using tools having a radius r constant in the axial direction as shown in Figs. 2(a) through 2(c). As illustrated in Fig. 3, when a tool TL having a radius r is moved in the direction of the arrow along a straight line LN and a curved line CV to cut surfaces $CS_1$, $CS_2$, a workpiece WK can be cut to desired contour simply by offsetting the tool center a distance equal to the radius r from the straight line LN and the curved line CN even if the workpiece WK has nonparallel upper and lower surfaces $PS_1$, $PS_2$. With the tool TL having the constant radius r, therefore, the distance by which the tool center is offset can be kept constant at all times irrespective of the depth by which the tool cuts axially into the workpiece, or even when the upper and lower workpice surfaces $PS_1$, $PS_2$ do not lie parallel to each other.

Numerical control has found increasing use in the recent past for cutting three-dimensional shapes, particularly dies. Tapered tools TTL having tapers TP as shown in Figs. 4(a), (b) are used more frequently for cutting dies. Such tapered tools cause no problem as long as they cut workpieces with their tips. However, when their tapered surfaces are employed to form workpiece profiles, the tapered tools are unable to effect correct cutting under the prior tool compensation control, as the tool radius varies in the axial direction.

It is accordingly an object of the present invention to provide a tool compensation method for use when cutting a workpiece with a tapered tool.

US—A—3 528 337 discloses a method of cutting a workpiece using a tapered tool, in which the tool is offset from a commanded cutting surface by one-half the tool diameter. The problem is not addressed, or even acknowledged, of providing a suitable offset when the depth of cut varies when machining along a linear commanded cutting path.

According to the present invention there is provided a tool compensation method applicable when cutting a workpiece with an axially tapered tool for offsetting the tool from a straight commanded cutting path by a distance corresponding to the radius of the tool at the level of a surface of the workpiece into which the tool projects by a commanded cutting depth, characterised in that:

the tool moves along the commanded cutting path with a linearly varying commanded cutting depth;

there are stored data enabling the tool radius to be calculated at any position along its taper, together with the coordinates of a starting tool offset position;

the coordinates of a final point on the commanded cutting path and the commanded cutting depth thereat are provided;

the tool radius at the surface of the workpiece at said final point is calculated from the commanded cutting depth thereat and from said stored values;

the tool offset position coordinates of the final offset position corresponding to said final point on the commanded cutting path are calculated from the coordinates of this final point and from the tool radius at the surface of the workpiece at said final point;

incremental coordinate values are calculated as the differences between the coordinates of the final offset position and of the starting tool offset position; and

the tool is commanded to move in the X—Y plane in accordance with these incremental values, thereby to attain the final offset position, whilst at the same time its cutting depth is varied as commanded.

Brief description of the drawings

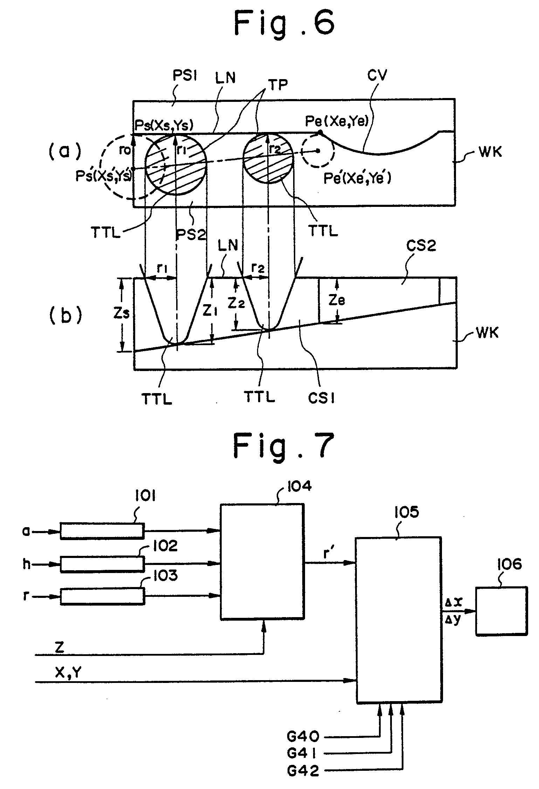

Fig. 1 is a set of diagrams explanatory of conventional tool compensation methods; Fig. 2 is a set of elevational views of tools having constant radii; Fig. 3 is a perspective view of a workpiece as it is cut by tool having a constant radius; Fig. 4 is a set of elevational views of tapered tools; Fig. 5 is a perspective view of a workpiece as it is cut by a tapered tool; Fig. 6 is a set of diagrams illustrative of a tool compensation method of the present invention; and Fig. 7 is a block diagram of an embodiment for effecting the method of the invention.

The present invention will hereinafter be described in more detail with reference to an embodiment thereof shown in the drawings.

Fig. 5 is a view explanatory of the reason why the conventional tool compensation method cannot be relied on for cutting a workpiece with a tapered tool. Identical parts in Fig. 5 are denoted by identical reference characters as in Fig. 3. The tapered tool used is the same as the one shown in Fig. 4(a).

The tool TTI is moved along the straight line LN to cut the workpiece WK with the tool tip held against the lower workpiece surface $PS_2$. Inasmuch as the upper surface $PS_1$ of the workpiece WK does not lie parallel to the lower surface $PS_2$ thereof, the height Z from the lower surface to the upper surface, or the depth by which the tool cuts vertically into the workpiece, varies as the cutting progresses. If the amount of offsetting of the tool remains equal to the initial offsetting tool radius throughout the cutting, the tool will not cut deep enough sideways as the cutting progresses, thus failing to cut the workpiece accurately. Therefore, it is necessary that the tool radius compensation amount be changed as the cutting progresses.

A tool radius r at a distance h from the tool tip and a half taper angle a° as shown in Fig. 4(a) are set or supplied as inputs, and a tool radius r' is determined by the following equation dependent on the height Z (Fig. 5) as separately supplied as an input or computed:

$$r' = r + (Z - h) \tan a \qquad (1)$$

Tool compensation is carried out on the basis of the tool radius thus determined.

With the above method, the workpiece cutting progresses while the taper TP of the tool TTL is in contact with the commanded straight line LN at all times, as illustrated in Fig. 6. Fig. 6(a) is a horizontal cross-sectional view of the tool TTL taken along a plane containing the upper workpiece surface $PS_1$ (Fig. 5), and Fig. 6(b) is a side elevational view of the tool.

Fig. 7 is a block diagram of an embodiment for carrying out the method of the invention. Designated at 101, 102, 103 are registers for storing a taper angle a°, a height h as measured from the tool tip, and a radius r at the height h, respectively, which are supplied as an input through an MDI terminal or set by a dial on a panel. A radius computing unit 104 performs the arithmetic operation as defined by the equation (1) and produces as an output a radius r' which varies from time to time dependent on the height Z (the depth by which the tool cuts into the workpiece). A path computing unit 105 computes and delivers as an output coordinates (Xe', Ye') of an offset position Pe' at a final point Pe (Fig. 6) on the straight line LN having X—Y coordinates (Xe, Ye), and also computes the difference between the offset position Pe' and a starting offset position Ps' (Xs', Ys'). The path computing unit 105 is supplied with G codes indicative of a leftward offset (G41) with respect to the direction of advancing movement, a rightward offset (G42), or an offset cancel (G40), and also the X—Y coordinates (Xe, Ye) of the final point Pe of the straight line LN. The path computing unit 105 computes the coordinates (Xe', Ye') of the offset position Pe' at the final point dependent, on the G code, and then computes incremental values Δx, Δy from the starting offset position to the final offset position based on the computed coordinates and the coordinates (Xs', Ys') of the starting offset position Ps' which are stored in a register (not shown). Designated at 106 is a known pulse distributor.

It is now assumed that an NC data tape supplies data on the coordinates (Xe, Ye) of the final point Pe on the straight Line LN and height Ze at the final point in order to cut a surface $CS_1$ (Fig. 5). The tool TTL is located in dotted-line position as shown in Fig. 6, and the starting offset coordinates (Xs', Ys') are stored in the non-illustrated register in the path computing unit 105. The height Ze is a distance from the lower workpiece surace $PS_2$ to the upper workpiece surface $PS_1$ at the final point Pe.

When supplied with Xe, Ye, Ze the radius computing unit 104 determines a tool radius re at the final point Pe by way of the arithmetic operation according to the equation (1) using the taper angle a, the distance h, the radius r and the height Ze stored in the registers 101 through 103, and delivers the determined tool radius to the path computing unit 105. The path computing unit 105 uses the supplied radius re and the coordinates (Xe, Ye) of the final point to compute the coordinates (Xe', Ye') of the final offset position Pe' in the same manner as the conventional tool compensation, and delivers out the computed coordinates. Incremental values Δx, Δy in the direction of X and Y axes are determined by the following equations using the coordinates (Xs', Ys') of the starting offset position Ps' and the computed coordinates (Xe', Ye') of the final offset position Pe':

$$\Delta x = Xe' - Xs' \qquad (2)$$

$$\Delta y = Ye' - Ys' \qquad (3)$$

The incremental values are then supplied to the pulse distributor 106, which then causes the tool center to move along the dot-and-dash line illustrated in Fig. 6(a).

While in the foregoing description the data on the taper angle a° and the radius r (at the height h) are suppled as inputs through the MDI terminal or the dial, other data items than a, r, h may used provided they can determine a tool radius at a desired height.

The tool compensation method of the present invention enables a tapered tool to cut a workpiece simply and precisely under the control of a command, and facilitates programming.

Although the description has been directed to cutting of the workpiece along the straight line LN, cutting along a curved line can also be performed using the linear cutting technique by incorporating a multiplicity of minute straight lines which approximate the curved line as a whole.

The present invention is also applicable to instances where an NC data tape is prepared by an automatic NC data tape generating apparatus.

**Claims**

1. A tool compensation method applicable when cutting a workpiece (WK) with an axially tapered tool (TTL) for offsetting the tool (TTL) from a straight commanded cutting path (LN) by a distance corresponding to the radius of the tool (TTL) at the level of a surface (PS1) of the workpiece (WK) into which the tool projects by a commanded cutting depth (Z), characterised in that:

the tool moves along the commanded cutting path (LN) with a linearly varying commanded cutting depth (Z);

there are stored data enabling the tool radius to be calculated at any position along its taper, together with the coordinates (Xs', Ys') of a starting tool offset position (Ps');

the coordinates (Xe, Ye) of a final point (Pe) on the commanded cutting path (LN) and the commanded cutting depth (Ze) thereat are provided;

the tool radius (re) at the surface (PS1) of the workpiece (WK) at said final point (Pe) is calculated from the commanded cutting depth (Ze) thereat and from said stored values;

the tool offset position coordinates (Xe', Ye') of the final offset position (Pe') corresponding to said final point (Pe) on the commanded cutting path (LN) are calculated from the coordinates (Xe, Ye) of this final point (Pe) and from tool radius (re) at the surface (PS1) of the workpiece (WK) at said final point (Pe);

incremental coordinate values ($\Delta x$, $\Delta y$) are calculated as the differences between the coordinates of the final offset position (Pe') and of the starting tool offset position (Ps'); and

the tool (TTL) is commanded to move in the X—Y plane in accordance with these incremental values ($\Delta x$, $\Delta y$), thereby to attain the final offset position (Pe') whilst at the same time its cutting depth is varied as commanded.

2. A tool compensation method according to claim 1, wherein said stored data comprise the toll taper angle (a°), a tool taper height (h) as measured from the tool tip, and the tool radius (r) at said height (h), and the tool radius (re) at the cutting depth (Ze) is calculated by the expression:

$$re = r + (Ze - h) \tan a°.$$

**Patentansprüche**

1. Verfahren Zur Werkzeugkompensierung, das anwendbar ist, wenn ein Werkstück (WK) mit einem axial konischen Werkzeug (TTL) ausgefräst wird, zum Versetzen des Werkzeugs (TTL) von einem geraden befohlenen Fräsweg (LN) um eine Distanz, die mit dem Radius des Werkzeugs (TTL) in der Ebene einer Oberfläche (PS1) des Werkstücks (WK), in welche das Werkzeug um eine befohlene Frästiefe (Z) vorsteht, korrespondiert, dadurch gekennzeichnet, daß

—sich das Werkzeug längs des befohlenen Fräsweges (LN) mit einer sich linear ändernden befohlenen Frästiefe (Z) bewegt,

—Daten gespeichert sind, die zusammen mit den Koordinaten (Xs', Ys') einer Werkzeugversatz-Startposition (Ps') gestatten, den Werkzeugradius in jeder Position längs dessen konischem Verlauf zu berechnen,

—die Koordinaten (Xe, Ye) eines Endpunkts (Pe) des befohlenen Fräsweges (LN) und die befohlene Frästiefe (Ze) bei diesem bestimmt werden,

—der Werkzeugradius (re) bei der Oberfläche (PS1) des Werkstücks (WK) an dem Endpunkt (Pe) aus der befohlenen Frästiefe (Ze) bei diesem und aus den gespeicherten Werten berechnet wird,

—die Werkzeugversatz- Positionskoordinaten (Xe', Ye') der Versatzendposition (Pe'), die mit dem Endpunkt (Pe) in dem befohlenen Fräsweg (LN) korrespondiert, aus den Koordinaten (Xe, Ye) dieses Endpunkts (Pe) und aus dem Werkzeugradius (re) bei der Oberfläche (PS1) des Werkstücks (WK) an dem Endpunkt (Pe) berechnet werden,

—Zuwachskoordinatenwerte ($\Delta x$, $\Delta y$) als die Differenzen zwischen den Koordinaten der Versatzendposition (Pe') und der Werkzeugversatz-Startposition (Ps') berechnet werden und

—dem Werkzeug (TTL) befohlen wird, sich in der X-Y-Ebene in Übereinstimmung mit diesen Zuwachskoordinatenwerten ($\Delta x$, $\Delta y$) zu bewegen, um dadurch die Versatzendposition (Pe') zu erreichen, während gleichzeitig sein Frästiefe wie befohlen variiert wird.

2. Verfahren zur Werkzeugkompensierung nach Anspruch 1, bei dem die gespeicherten Daten den Werkzeugkonuswinkel (a°), eine Werzeugkonushöhe (h) gemessen von der Werzeugspitze und den Werkzeugradius (r) bei der Höhe (h) beinhalten und der Werkzeugradius (re) bei der Frästiefe (Ze) durch den Ausdruck

$$re = r + (Ze - h) \tan a°$$

berechnet wird.

**Revendications**

1. Un procédé de compensation d'outil applicable en cas d'opération de coupe effectuées sur une pièce à usiner (WK) au moyen d'un outil axialement conique (TTL) destiné à décaler l'outil (TTL) par rapport à un trajet (LN) de coupe en ligne droite commandé d'une distance correspondant au rayon de l'outil (TTL) au niveau d'une surface (PS1) de la pièce à usiner (WK) dans laquelle l'outil fait saillie d'une profondeur de couple (Z) commandée, caractérisé en ce que:

l'outil se déplace selon un trajet (LN) de coupe commandé à une profondeur de coupe (Z) comamndée variant linéairement;

on stocke des données premettant de calculer le rayon de l'outil à n'importe quel endroit de son cône, en même temps que les coordonnées (Xs', Ys') d'une position de départ (Ps') décalée de l'outil;

les coordonnées (Xe, Ye) d'un point final (Pe) du trajet de coupe (LN) commandé et de la profondeur de coupe (Ze) commandée à cet endroit sont fournies;

le rayon de l'outil (re) à l'endroit où il porte sur la surface (PS1) de la pièce à usiner (WK) audit point final (Pe) est calculé à partir de la profondeur de coupe (Ze) commandée à cet endroit et desdites valeurs stockées;

les coordonnées (Xe', Ye') de position décalée de l'outil, de la position décalée finale (Pe') correspondant audit point final (Pe) du trajet de coupe commandé (LN) sont calculées à partir des coordonnées (Xe, Ye) de ce point final (Pe) et du rayon de l'outil (re) à l'endroit où il porte sur la surface (PS1) de la pièce usiner (WK) à ce point final (Pe);

des valeurs de coordonnées incrémentielles ($\Delta x$, $\Delta y$) sont calculées, en tant que différences entre les coordonnées de la position décalée final (Pe') et de la position décalée de départ (Ps'); et l'outil (TTL) est commandé en vue de se déplacer dans le plan X—Y en fonction de ces valeurs incrémentielles ($\Delta x$, $\Delta y$) pour atteindre ainsi la position décalée finale (pe') pendant que dans le même temps sa profondeur de coupe varie comme commandé.

2. Un procédé de compensation d'outil selon la revendication 1, dans lequel les données stockées comprennent l'angle de cône (a°), une hauteur de cône (h) de l'outil mesurée à partir de la pointe de l'outil, et le rayon (r) de l'outil à ladite hauteur (h), le rayon (re) de l'outil à la profondeur de coupe (Ze) étant calculé l'expression:

$$re = r + (Ze - h) \; tg \; a°.$$

# Fig. 1

(a)

(b)

# Fig. 2

# Fig. 4

(a)    (b)    (c)    (a)    (b)

# Fig. 3

# Fig. 5

# Fig.6

# Fig.7